# EUROPEAN PATENT APPLICATION

(11) **EP 2 535 564 A1**
(43) Date of publication of application: **19.12.2012**
(21) Application number: 10844997.6
(22) Date of filing: 28.06.2010
(51) Int. Cl.: F03D 3/06, F03D 1/06

(54) **WIND-WHEEL BLADE FOR VERTICAL AXIS WIND POWER GENERATOR AXIS**

(30) Priority: 08.02.2010 CN 201019114068
(71) Applicant: National Wind Energy Co. Ltd., Pinggu District, Beijing 101206 (CN)
(72) Inventor: JIANG, Dalong, Beijing 101206 (CN); SHENG, Mingfan, Beijing 101206 (CN); XU, Jinquan, Beijing 101206 (CN)
(74) Representative: Hohendorf, Carsten
(86) International application number: PCT/CN2010/000957
(87) International publication number: WO 2011/094912

(57) **Abstract**

A rotor blade of a vertical axis wind turbine provided by the present invention includes a skeleton forming the blade shape and a skin fixed on the outside of the skeleton, and the blade is in the form of a vertical cylindrical object whose horizontal cross-section is in the sectional form of an airplane wing, in other words, the outward facing outer side surface of blade is a streamlined cambered surface, and there is a smooth transition between this outer side surface and its corresponding inner side surface to form a relatively larger windward end, i.e. the head end and the smaller tail end of the blade. Thanks to its streamlined form and special skeleton structure, the blade provided by the present invention has such advantages as light weight, high strength and rigidity, easy assembly and fabrication and high profiling accuracy.

## Description

### Technical field

The present invention relates to the technical field of wind turbine, which provides a structural element of vertical axis wind turbine, in particular, a structure of blade in the rotor of a vertical axis wind turbine.

### Background art

In prior art, wind turbines are mostly horizontal axis turbine where the main axis is placed horizontally, on which a rotor is mounted, the rotor blades are mostly of triangle-shape with one end bigger and the other end smaller, the smaller end being slender, and such slender blades are susceptible to deformation and generation of resonance vibration under the action of wind power and can also be easily broken under the action of wind pressure, thus, the problem of poor wind resistance exists, furthermore, the resonance vibration during rotation may give rise to the problem of a too low power generation capacity. Due to the aforesaid problems existing with such rotor blades, and further because of the present wind turbine development tends towards larger scale and larger power rating, the blade breakage probability will be higher with the increasing of rotor diameter, and their service life will be shorter, which results in a negative impact on the development wind power generation cause.

With the development of wind power generation technology, vertical axis wind turbines are increasingly demonstrating their advantages of high efficiency, high power and easy installation as well as long service life, etc. However, conventional vertical axis wind turbines only have the main axis of the power generator changed from being horizontally placed into being vertical placed, but still utilize the rotor blades of the existing horizontal axis wind turbine, where the blades are still slender in form, with the blade extending from the connecting end of the rotating component of wind turbine to the outer end of the rotor. Therefore, many problems existing with the rotor of the aforementioned horizontal axis wind turbine remain unsolved completely.

### Description of the present invention

The purpose of the present invention is to improve the deficiencies of the prior art and provide a blade structure characterized by light weight, low revolving force requirement, high strength and rigidity and easy fabrication for the rotor of vertical axis wind turbine.

The purpose of the present invention is fulfilled as follows:
The blade structure for the rotor of the vertical axis wind turbine provided by the present invention comprises a skeleton for forming the blade shape and a skin fixed on the outside of said skeleton, and such blade takes the shape of a vertical cylindrical body, whose horizontal cross-section is in the sectional form of an airplane wing, in other words, the outward outer side surface of the blade is a streamlined cambered surface, and there is a smooth transition between said outer side surface and the corresponding inner side surface to form a relatively big windward side, i.e. the head end and the smaller tail end of the blade.

The distance between the outer side surface and the inner side surface of the cylindrical body of said blade is basically on the gradual decrease from said head end to the tail end; and/or, in the vertical direction of the blade, the various horizontal cross-sections are identical in terms of size and form.

The skeleton includes a blade skeleton, a skeleton reinforcement and a leaf-shaped knighthead;

There are several blade skeletons, which are frames in a horizontal section in form of an airplane wing for the cylindrical objects of the blades, and are aligned arrangement at a set spacing in the direction perpendicular with the blades;

The skeleton reinforcement comprises a number of straight lever elements, and each skeleton reinforcement wraps around a number of said blade skeleton frames in aligned arrangement, and each of said skeleton reinforcement has an intersecting point of fixation with the frame of all blade skeletons in a vertical direction, which form a side wall skeleton of the blades to support and/or fix said skin;

Two ends of said leaf-shaped knighthead are supported and fixed on the lever body on the frame formed by said blade skeleton in an opposite position so as to support and retain the shape of the frame.

The skeleton reinforcement comprises four skeleton main ribs and a number of skeleton auxiliary ribs, and said skeleton main ribs are distributed in such a manner: two of the said skeleton main ribs are placed on the side of the outer side surface of the corresponding blade while the other two skeleton main ribs are placed on the side of the inner side surface of the corresponding blade, said four skeleton main ribs form a rectangle in the horizontal cross-section of said blade, and are placed around the vertically provided lower mass center of said blade and in such a manner that the mass of said blade is balanced by the four skeleton main ribs.

The skeleton main ribs are lever elements with a strength and/or rigidity higher than those of said skeleton auxiliary ribs; and/or,
the connecting points between said skeleton main ribs and auxiliary ribs and said blade skeleton intersect with and are fixed at the intersecting points between said leaf-shaped knighthead and said blade skeleton.

The skeleton main rib is a longitudinally through hollow lever body with a cross-section larger than said skeleton auxiliary ribs; or,
said skeleton main rib and skeleton auxiliary ribs are all longitudinally through hollow lever bodies, and a partitioning wall is provided in the longitudinally hollow cavity of the lever of said skeleton main rib to divide a large cavity into two smaller cavities, and said skeleton auxiliary ribs are single-cavity hollow lever bodies with a relatively small cross-section; and/or,
said blade skeleton is a hollow lever body, and the longitudinal hollow cavity of said lever is divided into two longitudinal cavities by a longitudinal partitioning wall.

The leaf-shaped knightheads are placed on the frame formed by said blade skeleton in a mutually parallel manner.

The leaf-shaped knighthead also include a diagonal drawbar, one end of which is fixed at the intersecting point between a leaf-shaped knighthead opposite said outer side surface of the blade and said frame, while the other end is fixed at the intersecting point between another leaf-shaped knighthead opposite said inner side surface of the blade and said frame; and/or,
said diagonal drawbar is fixed at the intersecting point between said leaf-shaped knighthead intersecting with said skeleton main rib and said blade skeleton.

The blade skeleton, skeleton reinforcement and leaf-shaped knighthead are fabricated by using aluminum profiles; and/or said skin is made of cloth, aluminum sheet and/or glass fiber sheet; or made of other metal sheets. Welding or cemented connection is provided between the various blade skeleton, skeleton reinforcement and leaf-shaped knighthead. The cementing compound used may be amphoteric adhesive.

A rotor of a vertical axis wind turbine comprising said blade structure with the aforementioned characteristics, wherein it includes a number of said blades and rotors, each of said blades is fixed at one end of two knightheads or multiple knightheads along the vertical direction of its cylindrical object, while the other end of the knightheads is connected with said hub; or,
included are a number of said blades and hubs, and each of said blades is fixed at one end of two knightheads or multiple knightheads along the vertical direction of its cylindrical object, while the other end of the knightheads is connected with said hub; with reference to the vertical axis of said rotor, the said streamlined outer side surfaces of the various said blades are placed along the circumferential direction of a circle with a set radius; or, with reference to the vertical axis of said rotor, the streamlined said outer side surface of the various said blades are placed at a set angle formed with the tangential direction of a circle with a set radius; or,
included are a number of said blades and hubs, and each of said blades is fixed at one end of two knightheads or multiple knightheads along the vertical direction of their cylindrical objects, while the other end of the knightheads is connected with said hubs; there are 4-24 blades in said rotor.

The rotor blade of a vertical axis wind turbine provided by the present invention, wherein, its basic form comes from an airplane wing, and through the skeleton and skin structures forming the vertical cylindrical object, in particular, the provision of special structure including blade skeleton, blade knighthead and skeleton main and auxiliary ribs inside the skeleton as well as fabrication by using lightweight materials, the blade provided by the present invention and the vertical axis wind turbine rotor supported by this blade have such advantages of lightweight, high strength and rigidity, easy assembly and fabrication, high profiling accuracy, high wind resistance and high efficiency.

### A brief description of the drawings

Fig. 1 is a three-dimensional schematic illustrating the rotor blade of a vertical axis wind turbine provided by the present invention;
Fig. 2 is a schematic showing the cross-section structure of the skeleton auxiliary rib of the blade in Fig. 1 forming the tail end of blade width;
Fig. 3 is a schematic showing the cross-section structure of the skeleton main rib of the blade in Fig. 1;
Fig. 4 is a schematic illustrating the cross-section structure of a skeleton auxiliary rib placed between the skeleton main ribs of the blade shown in Fig. 1;
Fig. 5 is a schematic illustrating the cross-section structure of the blade skeleton of the blade shown in Fig. 1;
Fig. 6 is a top view showing one structure of the vertical axis wind turbine rotor installed with the blade shown in Fig. 1;
Fig. 7 is a front view illustrating the structure of a rotor shown in Fig. 6.

### Detailed description of the preferred embodiments

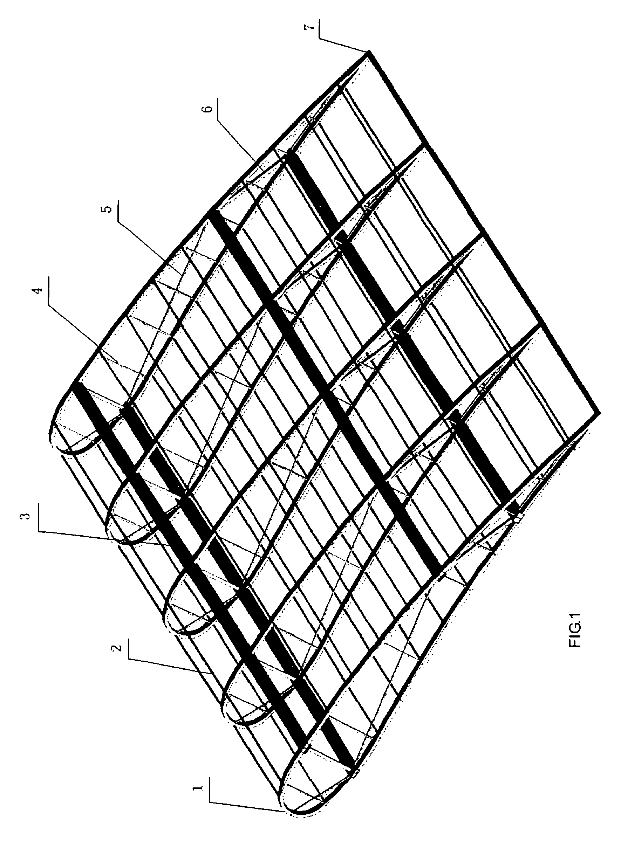

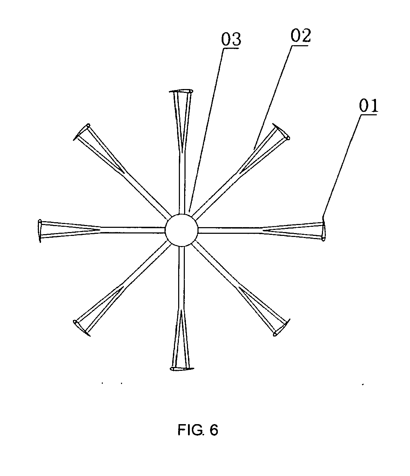

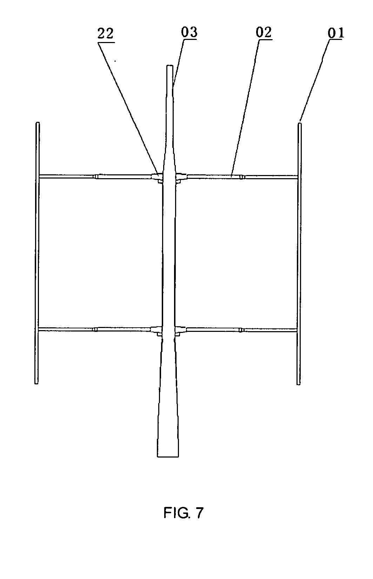

As shown in Fig. 1, the rotor blade of a vertical axis wind turbine provided by the present invention includes a skeleton forming a blade shape and a skin fixed on the outside of the skeleton (not shown in the figure), and the blade is in the form of a vertical cylindrical object whose horizontal cross-section is in the sectional form of an airplane wing, in other words, with reference to the revolution axis 03 of the rotor (see Figs. 6 and 7), the outward facing outer side surface of blade 01 is a streamlined cambered surface, and there is a smooth transition between this outer side surface and its corresponding inner side surface to form a relatively larger windward end, ie., the head end and the smaller tail end of the blade.

With reference to the vertical axis of the revolution axis 03 of said rotor, the distance between the outer side surface and the inner side surface of its cylindrical object is basically on the gradual decrease from said head end to the tail end; and in the vertical direction of the blade, the various horizontal cross-sections have the same size and form.

The blade provided by the present invention needs to withstand fairly high wind force, and is required to have a small rotational resistance, in other words, it should have a light dead weight and also have sufficient strength and rigidity. Therefore, the skeleton of the present blade may be designed as follows:
As shown in Fig. 1, the said skeleton comprises a blade skeleton 1, a skeleton main rib 3, skeleton auxiliary ribs 2 and 7 as well as leaf-shaped knighthead.

There are a number of blade skeletons 1, which are the frames forming the horizontal cross-section of the cylindrical object of the blade in the form of an airplane wing, and are subject to aligned arrangement at a set spacing in the vertical direction of the blade;

Skeleton main rib 3 and skeleton auxiliary ribs 2 and 7 are a number of vertically arranged lever elements, for example, straight levers, and the each of the skeleton main rib 3 and skeleton auxiliary ribs 2 and 7 of said blade is placed around said frame of all blade skeleton 1, and each of said skeleton main rib 3 and skeleton auxiliary ribs 2, 7 has an intersecting and fixed point in the vertical direction of said frame of all said blade skeleton, and the various skeleton main ribs 3 and skeleton auxiliary ribs 2, 7 placed around blade skeleton 1 at a set distance form the side walls of the skeleton of blade 01 for supporting the said skin;

The leaf-shaped knighthead support is provided between the opposite sides of the frame formed by blade skeleton 1, for example, the leaf-shaped knighthead is placed in the plane where the frame is located, with both ends fixed with blade skeleton 1, in other words, the two ends of the leaf-shaped knighthead are respectively fixed on frame of the said outer side surface and the inner side surface opposite the blade in correspondence with the blade skeleton, in order to keep the form of the frame of the blade skeleton unchanged.

The leaf-shaped knighthead may include two types, one type is the leaf-shaped knighthead 4 which are a number of straight levers placed between the frames formed by the said blade skeleton in parallel.

The said skeleton main rib 3 and skeleton auxiliary ribs 2, 7 intersect with the said leaf-shaped knighthead 4 provided on the said blade skeleton 1 and are fixed together at the said point of intersection.

The other type is diagonal drawbar 6, one end of which is fixed at one end of a leaf-shaped knighthead 4 on said outer side surface, while the other end is fixed on one end of another leaf-shaped knighthead 4 of said inner side surface; and further, the diagonal drawbar may be fixed at the point of intersection between said skeleton main rib 3 and the leaf-shaped knighthead 4.

The said skeleton main ribs 3 are lever elements with a high strength and/or rigidity while said skeleton auxiliary ribs are lever elements with a relatively low strength and/or rigidity.

The skeleton main ribs 3 are distributed preferably in such a manner: two of said skeleton main ribs 3 are placed on one side of the outer side surface of the blade while the other two skeleton main ribs 3 are placed on one side of the inner side surface of the blade, said four skeleton main ribs 3 form a rectangle looking from the horizontal cross-section of the blade, and are placed around the vertically provided mass center of the blade and in such a manner that the mass of said blade is balanced by the four skeleton main ribs 3.

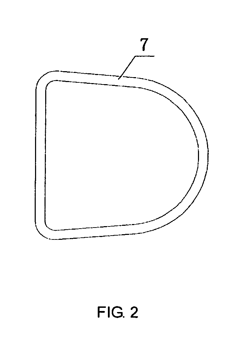

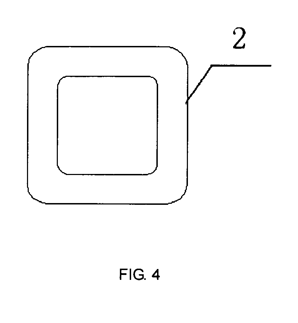

Skeleton main rib 3 and skeleton auxiliary rib 2, 7 may be fabricated by using the same lightweight aluminum profiles or by using different materials, and the skeleton main rib 3 is a hollow lever body with a cross-section bigger than that of a skeleton auxiliary rib 2, 7 (see Figs. 2, 3 and 4).

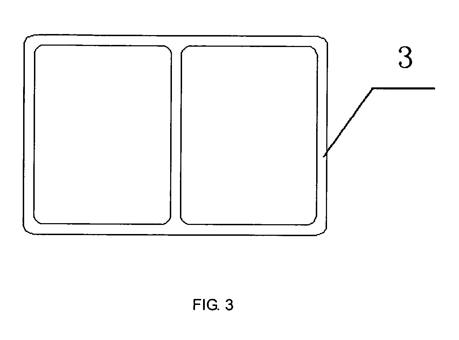

To improve the rigidity and strength of the skeleton main rib 3, a partitioning wall may be provided in the longitudinal hollow cavity of the lever of the skeleton main rib 3 to divide a large cavity into two smaller cavities (as shown in Fig. 3).

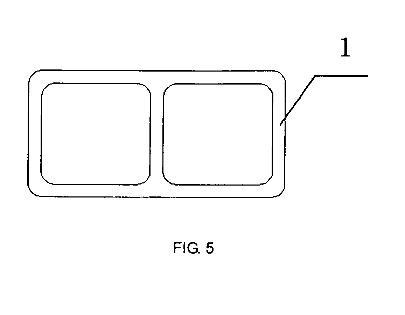

The blade skeleton may also be a hollow lever body, whose longitudinal cavity is divided into two longitudinal cavities by a longitudinal partitioning wall (see Fig. 5).

With the longitudinal cavity of hollow lever body being separated through partitioning wall, such lever structure may effectively reduce the weight of blade while improving its strength and rigidity.

Aluminum profile is the preferred material for fabricating said blade skeleton, skeleton main rib, skeleton auxiliary rib and leaf-shaped knighthead. The various lever elements inside the skeleton are welded or cemented, and the cementing compound used may be amphoteric adhesive.

Such skeleton main rib 3 and blade skeleton structures may well ensure the rigidity and strength of the blade while the weight of blade is very light. This enables the rotor composed of such blades to start at a very small wind force, and such wind turbine can generate electric power at a very small wind force. Tests have proven that rotor composed of such blades can rotate and generate electric power at a wind of Beaufort force 2. On the other hand, the aforementioned structure of the skeleton may also ensure a very high strength and rigidity of the blades themselves, which can withstand a wind up to 50m/s in force, and can work properly at a wind force of 35m/s or near a wind force of typhoon. Therefore, the wind turbine installed with the rotor blades provided by the present invention can be used for continuous safe power generation under a circumstance of high wind when conventional wind turbines have to stop operation. This is of great importance for the wind turbines to supply electric power to a power grid. In addition, the blades of this rotor are completely different from the problematic blade forms in the prior art, and are not easily subject to deformation and breakdown in addition to long service life, thus, if the present rotors are used in a wind farm, the chances of shutdown due to weather or failure will be very few, and the power grid can obtain the wind energy turned electric power persistently and steadily. This provides a reliable assurance for the vigorous development of wind power generation, and is of great importance to the national economy and livelihood of the people, environmental protection and the sustainable economic development. Furthermore, the present blade also has such advantages as easy combination and fabrication, high profile accuracy, etc.

As shown in Fig. 6, the vertical axis wind turbine rotor composed of the aforementioned blades includes a number of the said blades 01 and hubs 22, and each of the said blades 01 is fixed at one end of two or multiple knightheads 02 along the vertical direction of its cylindrical body, and the other end of the knightheads 02 is connected with the said hub 22; the rotor is placed on the revolution axis 03 of the rotor via hub 22. A power generator set is provided between the rotor hub and the revolution axis. With reference to the vertical axis of rotor revolution axis 03, the streamlined said outer side surface of blade 01 is placed along the circumferential direction of a circle with a set radius, and the set radius of the circle herein is exactly the radius of the rotor, which may be set based on such factors as the design power generating capacity of the wind turbine, the strength and rigidity of the structural elements, etc. The connection between this blade and the said rotor hub is made through knighthead 02;

The said blade may be installed in the rotor in the following manner: with reference to the vertical axis of the revolution axis of the said rotor, the streamlined outer side surface of the said blade is placed at a set angle formed with the tangential direction of the circumference of a circle with a set radius, for example, placed along an helical line. The blade and the hub of the said rotor are also connected by using knightheads.

The number of blades of the said rotor may be 2-24. If the number of blades is too few, the utilization ratio of the wind field is too low, keeping the power of the wind turbine at a low level. If the number of blades is too many, the centrifugal force is too big, which can easily lead to such accident as blade coming off and flying out.

Such blade is placed at or near the outer rim of the rotor, and the connection between the blade and the rotor hub or the rotating component of the wind turbine is realized by means of knighthead 02. Therefore, the blade is no longer slender, and a big distance between the rotor hub and the outer rim may be the knighthead used for connection of the blade, while the rotating part on the rotor for receiving wind force is only the vertical cylindrical blade of the outer rim. In the case of such blade, since its outer side surface is of airplane wing type, the passing air streams can be made good use of by the blades, thus, the rotating efficiency is very high. The knighthead connecting the blade and the rotor hub can be made into a form and structure with very high strength and rigidity but very small wind resistance, for example, the cross-section of the knighthead may be elliptical cross-section. In this manner, the problem of the existing rotor blade with a poor wind resistance and a lower power and efficiency can be fundamentally reversed.

### Industrial applicability

The blade structure of the rotor of a vertical axis wind turbine according to the present invention is applied in the field of wind power generation, which is characterized by light weight as well as fairly high strength and rigidity.

## Claims

1. A blade structure for the rotor of vertical axis wind turbine, wherein it comprises a skeleton for forming the blade shape and a skin fixed on the outside of the said skeleton, and such blade takes the shape of a vertical cylindrical body, whose horizontal cross-section is in the sectional form of an airplane wing, in other words, the outward outer side surface of the blade is a streamlined cambered surface, and there is a smooth transition between the said outer side surface and the corresponding inner side surface to form a relatively big windward side, ie., the head end and the smaller tail end of the blade.

2. The blade structure of the rotor of vertical axis wind turbine of Claim 1, wherein the distance between the outer side surface and the inner side surface of the cylindrical body of the said blade is basically on the gradual decrease from the said head end to the tail end; and/or, in the vertical direction of the blade, the various horizontal cross-sections are identical in terms of size and form.

3. The blade structure of the rotor of vertical axis wind turbine of Claim 1 or 2, wherein said skeleton includes a blade skeleton, a skeleton reinforcement and a leaf-shaped knighthead;
wherein there are several blade skeletons, which are frames in a horizontal section form of an airplane wing for the cylindrical objects of the blades, and are in aligned arrangement at a set spacing in the direction perpendicular with the blades;
wherein the said skeleton reinforcement preferably comprises a number of straight lever elements, and each skeleton reinforcement wraps around a number of the said blade skeleton frames in aligned arrangement, and each of the said skeleton reinforcement has an intersecting point of fixation with the frame of all blade skeletons in a vertical direction, which form a side wall skeleton of the blades to support and/or fix the said skin;
and/or wherein two ends of the said leaf-shaped knighthead are preferably supported and fixed on the lever body on the frame formed by the said blade skeleton in an opposite position so as to support and retain the shape of the frame.

4. The blade structure of the rotor of vertical axis wind turbine of Claim 3, wherein the said skeleton reinforcement comprises four skeleton main ribs and a number of skeleton auxiliary ribs, and said skeleton main ribs are distributed in such a manner: two of said skeleton main ribs are placed on the side of the outer side surface of the corresponding blade while the other two skeleton main ribs are placed on the side of the inner side surface of the corresponding blade, said four skeleton main ribs from a rectangle in the horizontal cross-section of the said blade, and are placed around the vertically provided lower mass center of said blade and in such a manner that the mass of the said blade is balanced by the four skeleton main ribs.

5. The blade structure of the rotor of vertical axis wind turbine of Claim 4, wherein said skeleton main ribs are lever elements with a strength and/or rigidity higher than those of the said skeleton auxiliary ribs; and/or
the connecting points between said skeleton main ribs and auxiliary ribs and said blade skeleton intersect with and are fixed at the intersecting points between said leaf-shaped knighthead and said blade skeleton.

6. The blade structure of the rotor of vertical axis wind turbine of Claim 4 or 5, wherein said skeleton main rib is a longitudinally through hollow lever body with a cross-section larger than the said skeleton auxiliary ribs; or,
the said skeleton main rib and skeleton auxiliary ribs are all longitudinally through hollow lever bodies, and a partitioning wall is provided in the longitudinally hollow cavity of the lever of said skeleton main rib to divide a large cavity into two smaller cavities, and said skeleton auxiliary ribs are single-cavity hollow lever bodies with a relatively small cross-section; and/or,
said blade skeleton is a hollow lever body, and the longitudinal hollow cavity of said lever is divided into two longitudinal cavities by a longitudinal partitioning wall.

7. The blade structure of the rotor of vertical axis wind turbine of Claim 3 or 4, wherein said leaf-shaped knightheads are placed on the frame formed by the said blade skeleton in a mutually parallel manner.

8. The blade structure of the rotor of vertical axis wind turbine of Claim 4, wherein said leaf-shaped knighthead also include a diagonal drawbar, one end of which is fixed at the intersecting point between a leaf-shaped knighthead opposite said outer side surface of the blade and said frame, while the other end is fixed at the intersecting point between another leaf-shaped knighthead opposite said inner side surface of the blade and said frame; and/or,
said diagonal drawbar is fixed at the intersecting point between said leaf-shaped knighthead intersecting with said skeleton main rib and said blade skeleton.

9. The blade structure of the rotor of vertical axis wind turbine of Claim 1, wherein said blade skeleton, skeleton reinforcement and leaf-shaped knighthead are fabricated by using aluminum profiles; and/or said skin is made of cloth, aluminum sheet and glass fiber sheet; and/or,
welding or cemented connection is provided between the various blade skeleton, skeleton reinforcement and leaf-shaped knighthead.

10. A rotor of a vertical axis wind turbine comprising the said blade structure defined in Claims 1-9, wherein it includes a number of said blades and rotors, each of said blades is fixed at one end of two knightheads or multiple knightheads along the vertical direction of its cylindrical object, while the other end of the knightheads is connected with said hub; or,
included are a number of said blades and hubs, and each of said blades is fixed at one end of two knightheads or multiple knightheads along the vertical direction of its cylindrical object, while the other end of the knightheads is connected with said hub; with reference to the vertical axis of said rotor, said streamlined outer side surfaces of the various said blades are placed along the circumferential direction of a circle with a set radius; or, with reference to the vertical axis of said rotor, the streamlined said outer side surface of the various said blades are placed at a set angle formed with the tangential direction of a circle with a set radius; or,
included are a number of said blades and hubs, and each of said blades is fixed at one end of two knightheads or multiple knightheads along the vertical direction of their cylindrical objects, while the other end of the knightheads is connected with the said hubs; there are 4-24 blades in said rotor.
